# EUROPÄISCHE PATENTANMELDUNG

(11) **EP 2 133 619 A1**
(43) Veröffentlichungstag der Anmeldung: **16.12.2009**
(21) Anmeldenummer: 08104335.8
(22) Anmeldetag: 10.06.2008
(51) Int. Cl.: F16P 3/14, G01B 11/25, G06T 7/00

(54) **Dreidimensionale Überwachung und Absicherung eines Raumbereichs**

(71) Anmelder: SICK AG, 79183 Waldkirch (DE)
(72) Erfinder: Braune, Ingolf, 79194 Gundelfingen (DE); Schmitz, Stephan, Dr., 79108 Freiburg (DE); MacNamara, Shane, Dr., 79285 Ebringen (DE); Hammes, Markus, Dr., 79104 Freiburg (DE)
(74) Vertreter: Hehl, Ulrich

(57) **Zusammenfassung**

Es wird eine 3D-Sicherheitskamera (10) zur Überwachung und Absicherung eines Raumbereichs (12) mit einem ersten und einem zweiten Bildsensor (14a, 14b), welche jeweils Bilddaten des Raumbereichs (12) erzeugen können, mit einer Beleuchtungseinheit (20), die mindestens eine Halbleiterlichtquelle (22) aufweist, um in dem Raumbereich (12) ein strukturiertes Beleuchtungsmuster (26) zu erzeugen, sowie mit einer Auswertungseinheit (32) angegeben, welche dafür ausgebildet ist, aus den Bilddaten nach dem Stereoskopieprinzip eine Tiefenkarte des Raumbereichs (12) zu erzeugen und die Tiefenkarte auf unzulässige Eingriffe in den Raumbereich (12) zu überwachen. Dabei hat die Halbleiterlichtquelle (22) eine hohe optische Leistung jedenfalls oberhalb von mehreren Watt, insbesondere mindestens 10 Watt, um dem Raumbereich (12) das Beleuchtungsmuster (26) mit einer Intensität aufzuprägen, welche die Erzeugung einer dichten Tiefenkarte für eine sichere Auswertung unabhängig von Schwankungen des Umgebungslichts in dem Raumbereich (12) ermöglicht und dass den Bildsensoren (14a, 14b) ein Filter (16) vorgeordnet ist, welcher Licht nur im Frequenzbereich der Halbleiterlichtquelle (22) transmittiert.

## Beschreibung

Die Erfindung betrifft eine 3D-Sicherkeitskamera und ein sicheres dreidimensionales Verfahren zur Überwachung und Absicherung eines Raumbereichs nach dem Oberbegriff von Anspruch 1 beziehungsweise 10.

Kameras werden seit langem zur Überwachung eingesetzt und finden zunehmend auch Anwendung in der Sicherheitstechnik. Eine typische sicherheitstechnische Anwendung ist die Absicherung einer gefährlichen Maschine, wie etwa einer Presse oder eines Roboters, wo bei Eingriff eines Körperteils in einen Gefahrenbereich um die Maschine herum eine Absicherung erfolgt. Dies kann je nach Situation die Abschaltung der Maschine oder das Verbringen in eine sichere Position sein.

Andererseits ist auch schon länger bekannt, dreidimensionale Bilddaten eines zu überwachenden Bildbereichs in Analogie zum menschlichen Auge mit zwei Kameras aus unterschiedlicher Perspektive zu gewinnen. In den überlappenden Bildbereichen werden gleiche Strukturen identifiziert und aus der Disparität und den optischen Parametern des Kamerasystems mittels Triangulation Entfernungen und somit ein dreidimensionales Bild beziehungsweise eine Tiefenkarte berechnet.

Nun wäre wünschenswert, diese dreidimensionale Bildgewinnung auch in der Sicherheitstechnik einzusetzen, weil damit eine noch genauere Überwachung möglich wird. Mit Hilfe der Tiefeninformationen können Schutzbereiche variabler und genauer festgelegt und mehr und genauere Klassen von erlaubten Objektbewegungen unterschieden werden, also beispielsweise Bewegungen des Roboters selbst oder Vorbeibewegungen eines Körperteils an der gefährlichen Maschine in einer unterschiedlichen Tiefenebene, die an sich völlig ungefährlich ist, aber von einer zweidimensionalen Kamera nicht differenziert werden kann. Erst recht haben derartige dreidimensionale Sicherheitskameras gegenüber klassischen Absicherungen mit Lichtgittern oder Trittmatten den Vorteil, dass sie seitlich oder oberhalb des Arbeitsbereichs montiert werden können und damit weder selbst die Arbeit behindert noch umgekehrt versehentlich beschädigt werden können.

Für die sicherheitstechnische Anwendung stellt sich schon im zweidimensionalen Fall die Herausforderung der sicheren Auswertung, denn von der fehlerfreien und absolut zuverlässigen Erkennung von zu detektierenden Ereignissen kann Gesundheit und Leben von Personen abhängen. Für den dreidimensionalen Fall ergibt sich noch eine zusätzliche Fehlerquelle, nämlich die Erzeugung der Entfernungsdaten aus den beiden aufgenommenen Bildern. Ganz abgesehen von hohen Anforderungen an die Rechenkapazität für eine Echtzeitanwendung kann auch ein guter Stereoalgorithmus keine Tiefeninformationen fehlerfrei berechnen, wenn die Bilddaten zu wenig wiedererkennbare Elemente aufweisen, die für eine Disparitätsschätzung in den beiden Bildern einander zugeordnet werden könnten. Das gilt insbesondere für kontrastschwache Szenarien.

Der Lösungsansatz der EP 1 543 270 B1 ist die Verwendung von zwei verschiedenen Stereoalgorithmen für eine dreidimensionale Sicherheitskamera, nämlich eine kontur- und eine korrelationsbasierte Szenenanalyse. Damit können sich möglicherweise Schwächen der einzelnen Algorithmen gegenseitig kompensieren. Sind aber bereits die rohen Bilddaten zu kontrastschwach, so hilft auch die doppelte Auswertung nicht weiter. Das System ist darüber hinaus passiv, arbeitet demnach allein mit dem Umgebungslicht. Dunkle Bereiche und Schwankungen im Umgebungslicht können daher die Genauigkeit der Erzeugung dreidimensionaler Bilddaten beeinträchtigen und so zu Ausfallzeiten führen.

In der US 2007-0263903 A1 erzeugt ein stereoskopisches Kamerasystem mittels einer Beleuchtungseinheit ein strukturiertes Beleuchtungsmuster, welches dann verwendet wird, um Entfernungen zu berechnen. Dabei entsteht das Muster, indem ein diffraktives optisches Element mit einem Laser oder einer LED beleuchtet wird. Übliche Beleuchtungen dieser Art haben aber eine verhältnismäßig geringe optische Ausgangsleistung von weniger als einem Watt. Eine Begrenzung der optischen Ausgangsleistung ist zur Einhaltung geringer Laserschutzklassen auch angestrebt. In der Druckschrift sind auch keine sicherheitstechnischen Anwendungen angesprochen, so dass die so entstehenden Helligkeiten ausreichend sind, weil gelegentliche Fehler in der Entfernungsberechnung oder Teilbereiche, zu denen vorübergehend keine Entfernungsdaten berechnet werden können, keine schwerwiegenden Folgen haben. Im Übrigen besteht immer die Möglichkeit, die Belichtungszeiten zu erhöhen und somit zu geringe Reichweiten der aktiven Beleuchtung auszugleichen. Das ist in der Sicherheitstechnik nicht möglich, weil in jeder sehr kurzen Ansprechperiode mehrere vollständige Tiefenkarten vorliegen müssen, um eine sichere Auswertung mit Vergleichen und Mehrfachabsicherung zu garantieren.

Schließlich sind aus anderen technischen Gebieten Lasermodule mit hohen Ausgangsleistungen bekannt. Diese werden etwa zum Koagulieren von Gewebe oder zur Materialbearbeitung eingesetzt. Für Überwachungsaufgaben werden sie nicht eingesetzt. Die Abwärme, der Kostenaufwand und erforderliche Absicherungsmaßnahmen aufgrund hoher Laserschutzklassen stellen einem solchen Einsatz auch Hindernisse entgegen.

Es ist daher Aufgabe der Erfindung, eine 3D-Sicherheitskamera zu schaffen, welche größere Raumbereiche zuverlässig und sicher überwachen kann.

Diese Aufgabe wird durch eine 3D-Sicherheitskamera gemäß Anspruch 1 und ein sicheres dreidimensionales Überwachungsverfahren gemäß Anspruch 10 gelöst. Dabei geht die Lösung von der Erkenntnis aus, dass die hohe und in allgemeinen Anwendungen nicht unter der Kontrolle des Sicherheitssystems stehende Dynamik des Umgebungslichts der sicheren Funktionsfähigkeit eines passiven Systems ohne eigene Beleuchtung entgegensteht. Dies gilt besonders bei sehr hellen Umgebungen, großen Überwachungsvolumina und großen Abständen von 5 Metern und mehr. Selbst das Licht von Hochleistungslichtquellen liefert im Gesamtspektrum ein zu schlechtes Signal/Rauschverhältnis. Deshalb wird die Beleuchtung auf ein oder mehrere schmale Frequenzbänder beschränkt, indem eine oder mehrere Halbleiterlichtquellen eingesetzt werden, welche Licht in einem oder mehreren sichtbaren, ultravioletten oder infraroten Frequenzbändern emittieren. Die Bildaufnahme erfolgt unter Einsatz auf diese Frequenzbänder abgestimmter Filter. Dann wird das Signal/Rauschverhältnis ganz erheblich verbessert, weil Umgebungslicht außerhalb der Frequenzbänder keine Rolle mehr spielt. Zugleich kann eine Übersteuerung der Bildsensoren durch zu hohe Umgebungslichtintensitäten vermieden werden.

Die erfindungsgemäße Lösung hat den Vorteil, dass der sicherheitstechnische Einsatz einer dreidimensionalen Kamera bei großen Reichweiten und robust gegenüber verschiedenen Umgebungsbedingungen, namentlich Umgebungslichtschwankungen ermöglicht wird. Im Gegensatz etwa zu einer Halogenlampe sind Halbleiterlichtquellen auch sehr langlebig, so dass eine hohe Verfügbarkeit gewährleistet ist. Die Beleuchtungseinheit ist klein genug, um in den Kamerakopf integriert zu werden, so das ein sehr kompakter Sensor entsteht. Es können große Raumbereiche zuverlässig überwacht und auf sichere Weise Tiefenkarten erzeugt werden, die dicht sind, also keine Lücken aufweisen und auch in Entfernungen von einigen Metern noch kleinere Eingriffe wie etwa durch einen Finger auflösen, und in denen keine blinden Flecke an Stellen ohne zuverlässige Entfernungsschätzung entstehen, welche sofort zu einer Notabschaltung des Systems führen müssten.

Die Halbleiterlichtquelle weist bevorzugt mindestens einen Laser auf, insbesondere einen Laserbarren, einen Laserstack, ein Laserarray, ein VCSEL (vertical-cavitiy surface-emitting laser) oder einen oder mehrere SMD-Laser. Mit derartigen Halbleiterlichtquellen aus der Materialbearbeitung lassen sich Lichtleistungen von 5-10 Watt je Lasermodul oder mehr verwirklichen. Optische Gesamtausgangsleistungen von mehr als 10 Watt, etwa von 20-25 Watt sind daher durch einzelne oder mehrere Laser realisierbar, und mit fortschreitender Technologie auch 50-100 Watt und mehr und damit noch höhere Reichweiten des Sensors. Speziell Laserbarren, die aus mehreren Laserdioden bestehen, können 15 Watt cw-Leistung und mehr erreichen. Die Kopplung mehrerer Lasermodule ist auch als SMD (surface mounted device) möglich, wo einzelne Laserdioden mit jeweils 5-10 Watt Ausgangsleistung fertigungstechnisch einfach auf einer Halbleiterplatte zusammengefasst werden können.

Grundsätzlich ist auch der Einsatz von LEDs denkbar, aber derzeit verfügbare LEDs bringen noch nicht genug Lichtleistung. Erforderlich wären beispielsweise bei ca. 5 Meter Reichweite des Sensors in der Größenordnung 100 Watt optische Ausgangsleistung.

Vorteilhafterweise ist ein steuerbares Heiz- und Kühlelement für die Halbleiterlichtquelle vorgesehen, insbesondere ein Peltier-Element. Der Wunsch nach hoher optischer Ausgangsleistung führt zu mehr Abwärme und kann eine zusätzliche Kühlung erfordern, welche die Integration in den Sensor erschwert. Die Erfindung beruht aber unter anderem auch auf der Erkenntnis, dass dies für eine sichere Überwachung in Kauf genommen werden muss. Es werden möglichst gute Konversionsraten der Halbleiterlichtquellen von 50% und mehr angestrebt, um die thermischen Effekte so gering wie möglich zu halten. Mit aktiven Temperaturregelelementen wird die Lebensdauer der Lichtquelle möglichst hoch gehalten, und es werden stabile Ausgangsleistungen und Wellenlängen erzeugt.

Die Auswertungseinheit ist bevorzugt dafür ausgebildet, die Halbleiterlichtquelle mit unterschiedlichen Strömen und/oder mit Bursts unterschiedlicher Pulslängen anzusteuern, um die Kohärenz des ausgesandten Lichts zu zerstören. Kohärenzeffekte im Bild sind ein Nachteil, den der Einsatz von Laserlichtquellen mit sich bringt. Sie könnten zu kritischen Verwechslungen mit Musterstrukturen oder gar mit Objekten führen und damit die sichere Auswertung beeinträchtigen. Um also die hohe erforderliche Lichtleistung durch Laserlichtquellen ohne solche Nachteile ausnutzen zu können, werden anschließend Maßnahmen ergriffen, Störungen der Auswertung durch Kohärenzen zu beseitigen. Die genannten Ansteuerungen führen zu einer Amplitudenmodulation. Ebenso denkbar ist aber auch eine alternative oder kumulative Phasenmodulation zur Zerstörung von Kohärenzen etwa durch eine schnell drehende Blende.

Bevorzugt werden mehrere Halbleiterlichtquellen derart zueinander angeordnet, dass ihr ausgesandtes Licht durch Interferenzen die Kohärenz des ausgesandten Lichts zerstört. Dies sind weitere alternative oder zusätzliche Maßnahmen, um Beeinträchtigungen der sicheren Auswertung aufgrund des Einsatzes von Laserlichtquellen zu vermeiden. Besonders einfach lässt sich dies mit SMD-Lasern realisieren, welche innerhalb eines Chips mehrere Emitterflächen aufweisen, die als unabhängige Laser fungieren. Damit wird die Kohärenz des gesamten Lasers unterdrückt. Der entstehende partiell kohärente Laser zeigt weniger Kohärenzmuster bzw. Speckle. Ist ergänzend die Blende des Objektivs groß, so können die ohnehin schon schwächeren Speckle unter die begrenzte Auflösung der Optik gedrückt werden und stören nicht mehr.

Der Halbleiterlichtquelle ist bevorzugt ein Mustererzeugungselement zugeordnet, um das Beleuchtungsmuster zu erzeugen, insbesondere ein diffraktives optisches Element, ein Dia oder eine verspiegelte Maske, wobei insbesondere das mustererzeugende Element den Strahlquerschnitt homogenisiert. Das entstehende strukturierte Muster sorgt für genügend Kontrast und Merkmale für den Stereoalgorithmus. Dafür können regelmäßige Muster wie Gitter oder Punktmatrizen ausreichen, es sind aber auch kompliziertere Muster vorstellbar, etwa Zufallsmuster oder selbstunähnliche Muster, in denen also jeder Bildbereich durch die Beleuchtung eine eindeutige Struktur aufgeprägt erhält. Ein diffraktives optisches Element ermöglicht nahezu beliebige Musterstrukturen mit hoher Tiefenschärfe. Es ist außerdem in der Lage, den oft ungünstigen langgezogenen Strahlquerschnitt eines ausgehenden Lasers auszugleichen, für nahezu gleiche Ausdehnung in den beiden Strahlquerschnittsdimensionen und somit für eine regelmäßigere Ausleuchtung des Raumbereichs zu sorgen. Das Dia ist bevorzugt aus wärmestabilem Material hergestellt und wird mittels Laserbelichtungsmaschinen mit speziellen Mikrostrukturen versehen, da ein gewöhnliches Dia sich durch die hohe Lichtleistung thermisch verändern könnte. Das Laserlicht wird mit Hilfe eines Köhlerbeleuchtungsaufbaus entsprechend der Diafläche aufgeweitet. Eine verspiegelte Maske, beispielsweise eine Glasmaske, hat den Vorteil, dass Licht entweder transmittiert oder reflektiert wird und somit so gut wie keine Energie in der Maske deponiert wird, so dass sie sich nur ganz geringfügig erwärmt.

Bevorzugt ist der Halbleiterlichtquelle ein Lichtleiter zugeordnet, welcher Licht zu einem Lichtaustrittsbereich führen kann, wobei dessen Form und/oder Querschnitt über die gesamte Länge oder im Lichtaustrittsbereich vorgegeben ist oder durch eine Verformungseinheit kontrolliert variiert werden kann, um das Licht in einer oder einer Überlagerung mehrerer Fasermoden austreten zu lassen und somit das Beleuchtungsmuster zu erzeugen, und wobei insbesondere ein Heizelement vorgesehen ist, um den Lichtleiter thermisch zu stabilisieren oder zu verformen. Bei dieser Ausführungsform werden Kohärenzeffekte der Laserbeleuchtung also gerade nicht eliminiert, sondern als das strukturierte Beleuchtungsmuster ausgenutzt. Damit wird ein Störeffekt in einen Nutzeffekt umgewandelt. Der Lichtleiter hat auch noch den Vorteil, dass der Strahlquerschnitt des ausgehenden Lichts optimiert ist, also seine langgestreckte Form verliert, und eine räumliche Trennung zwischen Beleuchtung und übrigen Sensorelementen vorgenommen werden kann, wodurch die Kühlung erleichtert wird. Je nach Anwendung können Schwierigkeiten bei der Stabilisierung einer bestimmten gewählten Fasermodenüberlagerung auch vermieden werden, indem eine große Anzahl beliebiger Fasermoden gleichzeitig überlagert werden und sie damit eine quasi-zufällige Struktur erzeugen.

Den Bildsensoren ist vorteilhafterweise eine Blende zugeordnet, welche so eingestellt wird, dass Specklemuster von den Bildsensoren aufgelöst werden. Dies ist eine ähnliche Grundidee wie im vorhergehenden Absatz, nämlich die Ausnutzung statt der Beseitigung auf den ersten Blick störender Kohärenzeffekte. Bei weit geöffneter Blende sind Speckles, wie oben dargestellt, unterhalb des Auslösungsvermögens der Optik.

Vorteilhafterweise ist eine Warn- und Absicherungseinrichtung vorgesehen, welche auf Detektion der Auswertungseinheit eines unzulässigen Objekteingriffs in den Raumbereich eine Warnung ausgeben oder eine Gefahrenquelle absichern kann. Solche sicherheitstechnischen Anwendungen werden durch die erfindungsgemäß auf sichere Weise gewonnen dichten Tiefenkarten deutlich verbessert, wenn nicht gar überhaupt erst ermöglicht.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische räumliche Gesamtdarstellung einer Ausführungsform einer erfindungsgemäßen 3D-Sicherheitskamera über einem mit einem strukturierten Muster beleuchteten Raumbereich mit einem beispielhaften Objekt;
- Fig. 2: ein Blockdiagram der Beleuchtungseinheit einer weiteren Ausführungsform mit mehreren SMD-Lasermodulen auf einer Leiterplatte;
- Fig. 3: ein Blockdiagram der Beleuchtungseinheit einer weiteren Ausführungsform mit einem Heizelement und einer Treiberschaltung;
- Fig. 4: eine Darstellung der Beleuchtungseinheit einer weiteren Ausführungsform mit einem Lichtleiter zur Erzeugung des Musters mittels transversalen Fasermoden (Lasermoden);
- Fig. 5a: eine illustrative Darstellung zu zylindrischen Fasermode und
- Fig. 5b: eine illustrative Darstellung zu rechteckigen Fasermoden.

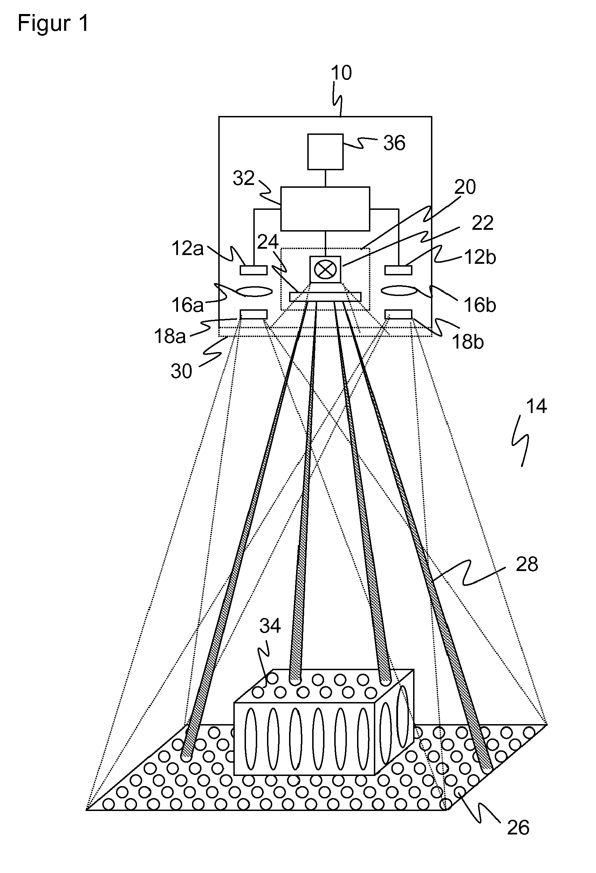

Figur 1 zeigt in einer schematischen dreidimensionalen Darstellung den allgemeinen Aufbau einer erfindungsgemäßen 3D-Sicherheitskamera 10 nach dem Stereoskopieprinzip, die zur sicherheitstechnischen Überwachung eines Raumbereichs 12 eingesetzt ist. Zwei Kameramodule sind in einem bekannten festen Abstand zueinander montiert und nehmen jeweils Bilder des Raumbereichs 12 auf. In jeder Kamera ist ein Bildsensor 14a, 14b vorgesehen, üblicherweise ein matrixförmiger Aufnahmechip, der ein rechteckiges Pixelbild aufnimmt, beispielsweise ein CCD- oder ein CMOS-Sensor. Den Bildsensoren 14a, 14b ist ein Objektiv mit einer abbildenden Optik zugeordnet, welches als Linsen 16a, 16b und Blende 18a, 18b dargestellt sind und in der Praxis als jede bekannte Abbildungsoptik realisiert sein können. Der Sichtwinkel dieser Optiken ist in Figur 1 durch gestrichelte Linien dargestellt, die jeweils eine Sichtpyramide bilden, und beträgt erfindungsgemäß beispielsweise 45°. Die Blenden 18a, 18b sind bevorzugt weit geöffnet, um möglichst viel remittiertes Licht aufzufangen und damit gute Reichweiten des Sensors 10 zu erreichen.

In der Mitte zwischen den beiden Bildsensoren 18a, 18b ist eine Beleuchtungseinheit 20 dargestellt, wobei diese räumliche Anordnung nur als Beispiel zu verstehen ist. Als Lichtquelle 22 für die Beleuchtungseinheit 20 dienen ein oder mehrere Halbleiterelemente. Bevorzugt handelt es sich dabei um Hochleistungslaserdioden wie Laserbarren, Laserstacks, Laserarrays oder VCSELs. Wichtig ist die hohe optische Ausgangsleistung im Bereich von mehreren Watt, die von jeder oder zumindest der Gesamtheit der Lichtquellen erreicht wird, bevorzugt mindestens 10 Watt und mehr, sowie ein oder mehrere schmale Frequenzbänder des ausgesandten Lichts.

Der Lichtquelle 22 ist in der optischen Achse ein mustererzeugendes Element 24, beispielsweise ein diffraktives optisches Element nachgeordnet, um in dem Raumbereich 12 ein strukturiertes Beleuchtungsmuster zu erzeugen. In der Darstellung handelt es sich um ein Punktmuster 26, wobei beispielhaft vier der erzeugenden Strahlenbündel 28 grau hervorgehoben sind. Andere Muster sind denkbar, für die Auswertung hilfreich und kontraststark könnte etwa neben dem dargestellten Punkt- oder Kreismuster ein Linienmuster, ein Schachbrettmuster oder ein Gitter sein. Wichtig ist, dass die einzelnen Strukturen im Bild eine gewisse Ausdehnung aufweisen, um sie von Störeffekten in Einzelpixeln zu diskriminieren, und dass der Kontrast gut ist, wobei etwa zu viele Graustufen die Auswertung erschweren könnten. Eine weitere Möglichkeit ist ein selbstunähnliches Muster, das also durch geometrische Operationen wie Verschiebung, Spiegelung oder Drehung in keinem Bereich auf sich selbst zurückgeführt werden kann. Dann kann aus dem Musterbereich auf die Lage im Raum zurückgeschlossen werden, wohingegen ein regelmäßiges Muster dies wegen Mehrdeutigkeiten nicht zulässt.

Eine Frontscheibe 30 hat Filtereigenschaften, welche auf die Sendefrequenz der Lichtquelle 22 abgestimmt ist. Auf diese Weise wird ein Großteil des Umgebungslichts ausgefiltert und das Signal/Rauschverhältnis verbessert. Der optische Filter kann auch anders realisiert sein, etwa in den Objektiven der Kameramodule.

Mit den beiden Bildsensoren 14a, 14b und der Beleuchtungseinheit 20 ist eine Steuerung 32 verbunden. Mittels der Steuerung 32 wird das Kontrastmuster 26 erzeugt und bei Bedarf in seiner Intensität variiert, und die Steuerung 32 empfängt Bilddaten der Bildsensoren 14a, 14b. Aus diesen Bilddaten berechnet die Steuerung 22 mit Hilfe einer stereoskopischen Disparitätsschätzung dreidimensionale Bilddaten (Entfernungsbild, Tiefenkarte) des Raumbereichs 12.

Mit zwei Bildsensoren tritt dabei ein bekanntes Problem auf, dass Strukturen längs der Epipolarlinie nicht für die Disparitätsschätzung herangezogen werden können, weil hier kein Triangulationswinkel auftritt oder, anders ausgedrückt, das System nicht lokal unterscheiden kann, ob die Struktur in den beiden Bildern aufgrund der Perspektive gegeneinander verschoben aufgenommen oder ob lediglich ein ununterscheidbarer anderer Teil derselben, parallel zur Basis des Stereosystems ausgerichteten Struktur verglichen wird. Um dies zu lösen, können in anderen Ausführungsformen ein oder mehrere weitere Kameramodule eingesetzt werden, welche gegenüber der Verbindungsgeraden der ursprünglichen beiden Kameramodule versetzt angeordnet sind.

Im von dem Sicherheitssensor 10 überwachten Raumbereich 12 befindet sich ein Objekt 34 stellvertretend für alle denkbaren Szenarien. Es kann sich also um einen Roboterarm, eine Maschine, eine Bedienperson und anderes handeln. Der Raumbereich 12 bietet Zugang zu einer Gefahrenquelle, sei es weil es ein Zugangsbereich ist oder weil sich eine gefährliche Maschine in dem Raumbereich 12 selbst befindet. Um diese Gefahrenquelle abzusichern, können ein oder mehrere virtuelle Schutz- und Warnfelder konfiguriert werden. Aufgrund der dreidimensionalen Auswertung ist es möglich, diese Felder ebenfalls dreidimensional zu definieren, so dass eine große Flexibilität entsteht. Die Steuerung 32 wertet die dreidimensionalen Bilddaten auf unzulässige Eingriffe aus. Die Auswertungsregeln können beispielsweise vorschreiben, dass in Schutzfeldern überhaupt kein Objekt vorhanden sein darf. Die Erfindung umfasst jedoch auch Ausführungsformen, in denen fortschrittlichere Auswertungen zwischen erlaubten und nicht erlaubten Objekten differenzieren können, etwa anhand von Bewegungsbahnen, Mustern oder Konturen, Geschwindigkeiten oder allgemeinen Arbeitsabläufen, die sowohl vorab als erlaubt eingelernt als auch anhand von Bewertungen, Heuristiken oder Klassifikationen noch während des Betriebs eingeschätzt werden.

Erkennt die Steuerung 32 einen unzulässigen Eingriff in ein Schutzfeld, so wird über eine Warn- oder Abschalteinrichtung 36 eine Warnung ausgegeben oder die Gefahrenquelle abgesichert, beispielsweise ein Roboterarm oder eine sonstige Maschine gestoppt. Dabei hängt es von der Anwendung ab, ob eine Warnung genügt, beziehungsweise es ist eine zweistufige Absicherung vorgesehen, bei der zunächst gewarnt und erst bei fortgesetztem Objekteingriff oder noch tieferem Eindringen abgeschaltet wird. Statt einer Abschaltung kann die angemessene Reaktion auch das sofortige Verbringen in eine ungefährliche Parkposition sein.

Um für sicherheitstechnische Anwendungen geeignet zu sein, ist der Sensor 10 fehlersicher ausgelegt. Dies bedeutet unter anderem, dass der Sensor 10 sich selber in Zyklen unterhalb der geforderten Ansprechzeit testen kann und dass der Ausgang zur sowie die Warn- oder Abschalteinrichtung 36 sicher, beispielsweise zweikanalig ausgelegt ist. Ebenso ist auch die Steuerung 32 selbstsicher, wertet also zweikanalig aus oder verwendet Algorithmen, die sich selbst prüfen können. Derartige Vorschriften sind für allgemeine berührungslos wirkende Schutzeinrichtungen in der EN 61496-1 bzw. der IEC 61496 normiert. Eine entsprechende Norm für Sicherheitskameras befindet sich in der Vorbereitung.

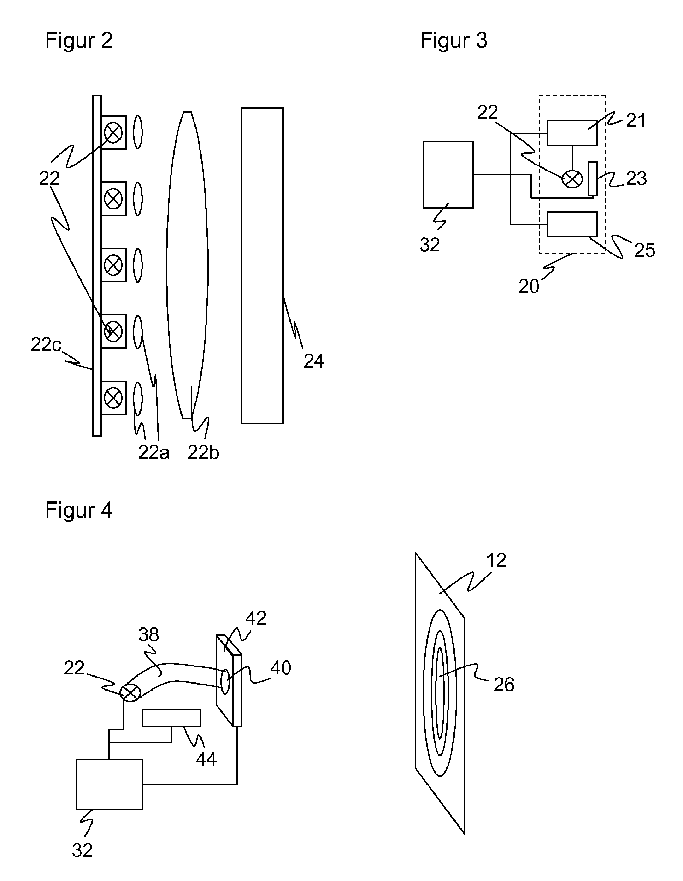

Um genügend Energie in dem Beleuchtungsmuster 26 für eine sichere Auswertung auch bei Reichweiten von 5 Metern oder gar 10 Metern und mehr zu erreichen, sind Hochleistungs-Lichtquellen erforderlich. Mit heutiger Technologie lässt sich das als Lasermodul verwirklichen, wobei einzelne Laserdioden die erforderliche Lichtleistung meist nicht mitbringen. Oben sind einige Realisierungen beispielsweise mit Laserstacks oder -arrays genannt. Figur 2 zeigt eine Ausführungsform, bei der mehrere SMD-Laserdioden 22 auf einer Halbleiterplatte 22c zusammengefasst sind. Deren Lichtstrahlen wird über individuelle Linsen 22a und/oder eine gemeinsame Linse 22b gebündelt und durchstrahlt dann das mustererzeugende Element 24. Die SMD-Technologie hat den Vorteil, dass die Anordnung mit gut beherrschbarer Fertigungstechnologie in das Leiterplattendesign integriert werden kann.

Laserlicht zeigt andererseits aber Kohärenzeffekte, welche zu Strukturen in den aufgenommenen Bildern führen. Diese Kohärenzen können die Auswertung stören, weil sie sicher von den eigentlichen Musterstrukturen unterschieden werden müssen. Sind die SMD-Laserdioden geometrisch geschickt angeordnet, so können sie die Kohärenz gegenseitig zerstören und damit den Störeffekt beseitigen. Haben die SMD-Laserdioden jeweils für sich schon mehrere Emitterflächen (Multi-Emitter-Laser), so wird deren Kohärenz durch das Zusammenspiel der mehr als einen Emitterfläche bereits erheblich eingeschränkt. Dann können kohärenzunterdrückende Effekte bereits nur eines SMD-Lasers Laser dieses Typs schon genügen.

Einen anderen Ansatz zur Zerstörung der Kohärenz verwirklicht eine Beleuchtungseinheit 20 gemäß Figur 3. Dabei ist die Steuerung 32 mit einer Treiberschaltung 21 für die Lichtquelle, mit einem Filter 23 und mit einem Heiz- und Kühlelement 25, etwa einem Peltierelement verbunden. Über die Treiberschaltung 21 können Pulse bzw. Bursts unterschiedlicher Länge erzeugt und damit die Amplitude moduliert werden. Das Filter 23 moduliert die Phase. Jede dieser Maßnahmen variiert auf kurzen Zeitskalen die Eigenschaften des ausgesandten Lichts und zerstört damit die Kohärenz, wobei abweichend von Figur 3 beschrieben auch nur eine dieser Maßnahmen umgesetzt sein kann. Über das Heizelement 25 schließlich kann die Temperatur stabilisiert werden.

Figur 4 zeigt eine weitere Ausführungsform der erfindungsgemäßen Beleuchtungseinheit 20. Im Gegensatz zu den Ausführungsformen gemäß Figuren 2 und 3 werden hier die Kohärenzeffekte nicht unterdrückt, sondern im Gegenteil gerade als das Kontrastmuster 26 genutzt. Dazu wird das Licht der Lichtquelle 22 über einen Lichtleiter 38 ausgesandt, etwa eine Glasfaser oder einen anderen optischen Leiter. Im Austrittsbereich 40 des Lichts ist eine Verformungs- und Stabilisierungseinheit 42 vorgesehen, welche den Lichtleiter auf Befehl der Steuerung 32 partiell oder in voller Länge verformen kann. Weiterhin ist ein thermisches Element 44 vorgesehen, über welches die Steuerung 32 die Temperatur des Lichtleiters 38 steuert.

Durch die somit verfügbaren mechanischen und thermischen Parameter wird die Form des Lichtleiters 38 und insbesondere dessen Querschnitt kontrolliert. Dabei sind die Verformungseinheit 42 und das thermische Element 44 optional, es genügt in einer einfacheren Version, den Lichtleiter 38 hinreichend stabil auszubilden.

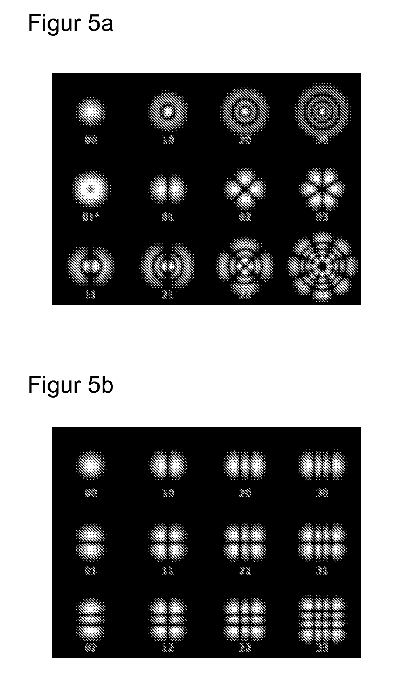

Ein mustererzeugendes Element 24 ist nicht erforderlich, weil das vereinfacht beispielhaft als Kreisringe 26 dargestellte Muster durch transversale Lasermoden bzw. Fasermoden erzeugt wird. Die Transversalmoden entstehen durch Randbedingungen an das Licht durch die äußere Begrenzung des Lichtleiters 32. "Transversal" bedeutet, dass sie sich unabhängig von der Entfernung, in der das Licht auftrifft, in ihrem Muster nicht verändern. Die Art des Musters hängt dabei vom Querschnitt des Lichtleiters 32 ab. Figur 5a zeigt einige Basismoden niedriger Ordnung bei zylindrischem Querschnitt, die analytisch als Laguerre-Gauß-Moden berechnet werden können. Entsprechend stellt Figur 5b Hermit-Gauß-Moden bei rechteckigem Querschnitt dar. Kompliziertere Querschnitte lassen sich nicht mehr analytisch angeben und führen zu anderen Mustern.

Wie man in den Figuren 5a und 5b erkennt, können höhere Ordnungen komplizierte Muster bilden, die Näherungen etwa an ein Punktmuster bilden. Dabei sind nur Basismoden gezeigt, das Gesamtmuster kann durch Superposition auch anders aussehen. Wenn der Lichtleiter seine Form und Temperatur unkontrolliert ändert, zeigen sich spontane Änderungen des Muster durch Modenwechsel, welche den Stereoalgorithmus beeinträchtigen. Dies wird durch thermische und mechanische Stabilisierung vermieden oder mittels Verformungseinheit 42 und thermischem Element 44 gezielt genutzt, um verschiedene Muster zu erzeugen. Beispielsweise können in einem Auswertungszyklus mehrere Muster verwendet werden, um Tiefenwerte redundant oder einander mit geeigneten Gewichtungsmaßen kompensierend zu ermitteln. Dies gleicht kontrastschwächere Teile des Raumbereichs 12 und/oder des jeweiligen Musters 26 aus.

Der Lichtleiter 38 erfüllt bei Bedarf auch noch die Funktion, Lichtquelle 22 und Lichtaustrittsbereich 40 räumlich zu trennen, etwa um die Kühlung der als Lichtquelle 22 dienenden Hochleistungslaserelemente zu erleichtern. Der Lichtleiter kann sogar nur diese Funktion erfüllen, dann wird ein mustererzeugendes Element 24 vorgeschaltet, und Elemente zur Kohärenzzerstörung gemäß Figuren 2 und 3 können ergänzt werden.

Nicht dargestellt ist eine weitere Ausführungsform mit einem ähnlichen Ansatz, bei dem statt Fasermoden Specklemuster als Kontrastmuster 26 verwendet werden. Speckles entstehen durch Interferenzen, wenn Unebenheiten an optische Oberflächen Laufzeitverschiebungen in der Größenordnung der Wellenlänge erzeugen. Sollen diese gewöhnlich als Störung aufgefassten Speckles als Muster 26 auswertet werden, ist es hilfreich, die Blenden 18a, 18b kleiner zu stellen, damit sie von den Bildsensoren 12a, 12b auch aufgelöst werden.

## Patentansprüche

1. 3D-Sicherheitskamera (10) zur Überwachung und Absicherung eines Raumbereichs (12) mit einem ersten und einem zweiten Bildsensor (14a, 14b), welche jeweils Bilddaten des Raumbereichs (12) erzeugen können, mit einer Beleuchtungseinheit (20), die mindestens eine Halbleiterlichtquelle (22) aufweist, um in dem Raumbereich (12) ein strukturiertes Beleuchtungsmuster (26) zu erzeugen, sowie mit einer Auswertungseinheit (32), welche dafür ausgebildet ist, aus den Bilddaten nach dem Stereoskopieprinzip eine Tiefenkarte des Raumbereichs (12) zu erzeugen und die Tiefenkarte auf unzulässige Eingriffe in den Raumbereich (12) zu überwachen,
**dadurch gekennzeichnet,**
**dass** die Halbleiterlichtquelle (22) eine hohe optische Leistung jedenfalls oberhalb von mehreren Watt, insbesondere mindestens 10 Watt hat, um dem Raumbereich (12) das Beleuchtungsmuster (26) mit einer Intensität aufzuprägen, welche die Erzeugung einer dichten Tiefenkarte für eine sichere Auswertung unabhängig von Schwankungen des Umgebungslichts in dem Raumbereich (12) ermöglicht und dass den Bildsensoren (14a, 14b) ein Filter (16) vorgeordnet ist, welcher Licht nur im Frequenzbereich der Halbleiterlichtquelle (22) transmittiert.

2. 3D-Sicherheitskamera (10) nach Anspruch 1,
wobei die Halbleiterlichtquelle (22) mindestens einen Laser aufweist, insbesondere einen Laserbarren, einen Laserstack, ein Laserarray, ein VCSEL oder mehrere SMD-Laser.

3. 3D-Sicherheitskamera (10) nach Anspruch 1 oder 2,
wobei ein steuerbares Heizelement (25) für die Halbleiterlichtquelle (22) vorgesehen ist, insbesondere ein Peltier-Element.

4. 3D-Sicherheitskamera (10) nach einem der vorherigen Ansprüche,
wobei die Auswertungseinheit (32) dafür ausgebildet ist, die Halbleiterlichtquelle (22) mit unterschiedlichen Strömen und/oder mit Bursts unterschiedlicher Pulslängen anzusteuern, um die Kohärenz des ausgesandten Lichts zu zerstören.

5. 3D-Sicherheitskamera (10) nach einem der vorherigen Ansprüche,
wobei mehrere Halbleiterlichtquellen (22) derart zueinander angeordnet werden, dass ihr ausgesandtes Licht durch Interferenzen die Kohärenz des ausgesandten Lichts zerstört.

6. 3D-Sicherheitskamera (10) nach einem der vorherigen Ansprüche,
wobei der Halbleiterlichtquelle (22) ein Mustererzeugungselement (24) zugeordnet ist, um das Beleuchtungsmuster (26) zu erzeugen, insbesondere ein diffraktives optisches Element, ein Dia oder eine verspiegelte Maske, wobei insbesondere das mustererzeugende Element (24) den Strahlquerschnitt homogenisiert.

7. 3D-Sicherheitskamera (10) nach Anspruch 1 oder 2,
wobei der Halbleiterlichtquelle (22) ein Lichtleiter (38) zugeordnet ist, welcher Licht zu einem Lichtaustrittsbereich (40) führen kann, und wobei dessen Form und/oder Querschnitt über die gesamte Länge oder im Lichtaustrittsbereich (40) vorgegeben ist oder durch eine Verformungseinheit (42) kontrolliert variiert werden kann, um das Licht in einer oder einer Überlagerung mehrerer Fasermoden austreten zu lassen und somit das Beleuchtungsmuster (26) zu erzeugen, und wobei insbesondere ein Heizelement (44) vorgesehen ist, um den Lichtleiter (38) thermisch zu stabilisieren oder zu verformen.

8. 3D-Sicherheitskamera (10) nach Anspruch 1 oder 2,
wobei den Bildsensoren (14a, 14b) eine Blende (18a, 18b) zugeordnet ist, welche so eingestellt wird, dass Specklemuster von den Bildsensoren (14a, 14b) aufgelöst werden.

9. 3D-Sicherheitskamera (10) nach einem der vorherigen Ansprüche,
wobei eine Warn- und Absicherungseinrichtung (36) vorgesehen ist, welche auf Detektion der Auswertungseinheit (32) eines unzulässigen Objekteingriffs in den Raumbereich (12) eine Warnung ausgeben oder eine Gefahrenquelle absichern kann.

10. Sicheres dreidimensionales Überwachungsverfahren zur Absicherung eines Raumbereichs (12), bei dem nach dem Stereoskopieprinzip aus mindestens zwei Bildern des Raumbereichs (12) eine Tiefenkarte erzeugt und auf unzulässige Eingriffe in den Raumbereich (12) überwacht wird, wobei der Raumbereich (12) mit mindestens einer Halbleiterlichtquelle (22) mit einem strukturierten Beleuchtungsmuster (26) beleuchtet wird,
**dadurch gekennzeichnet,**
**dass** der Raumbereich (12) mit einer hohen Intensität ausgeleuchtet wird, welche die Sicherheit der Erzeugung und Auswertung einer dichten Tiefenkarte unabhängig von Schwankungen des Umgebungslichts in dem Raumbereich (12) macht, und dass bei der Aufnahme der beiden Bilder Umgebungslicht mittels eines auf die Frequenz der Halbleiterlichtquelle abgestimmten Filters (16) ausgefiltert wird.

11. Überwachungsverfahren nach Anspruch 10,
wobei die Halbleiterlichtquelle (22) kohärentes Licht aussendet und die Kohärenz durch Ansteuerung mit unterschiedlichen Strömen, Bursts unterschiedlicher Pulslängen und/oder Interferenzen mehrerer Halbleiterlichtquellen (22) zerstört wird.

12. Überwachungsverfahren nach Anspruch 10 oder 11,
wobei Kohärenzen des ausgesandten Lichts der Halbleiterlichtquelle (22) gezielt erzeugt, verstärkt, stabilisiert und/oder variiert werden, insbesondere durch Begrenzungen der Lichtaustritts- und Lichteintrittsbereiche (18a, 18b, 40), und somit Kohärenzeffekte wie Fasermoden oder Specklemuster als Beleuchtungsmuster (26) ausgenutzt werden.

13. Überwachungsverfahren nach einem der Ansprüche 10 bis 12,
wobei bei Erkennen eines unzulässigen Objekteingriffs in den Raumbereich (12) eine Warnung ausgeben oder eine Gefahrenquelle abgesichert wird.
